# EUROPEAN PATENT APPLICATION

(11) **EP 0 957 203 A2**
(43) Date of publication of application: **17.11.1999**
(21) Application number: 99303673.0
(22) Date of filing: 11.05.1999
(51) Int. Cl.: E01C 5/18, E01C 7/30

(54) **Elastic pavement material**

(30) Priority: 11.05.1998 JP 14205598; 11.05.1998 JP 14205698
(71) Applicant: Taisei Rotec Corporation, Chuou-ku, Tokyo 104 (JP); Bridgestone Corporation, Tokyo (JP)
(72) Inventor: Fukuda, Takatomo, c/o Taisei Rotec Corporation, Chuo-ku, Tokyo (JP); Kobayashi, Akinori, c/o Taisei Rotec Corporation, Chuo-ku, Tokyo (JP); Fujita, Hiroshi, c/o Taisei Rotec Corporation, Chuo-ku, Tokyo (JP); Kawamata, Satoshi, Higashiyamato-shi, Tokyo (JP); Masuda, Kinji, Yokohama-shi, Kanagawa-Ken, (JP); Kuriki, Minoru, Yokohama-shi, Kanagawa-ken, (JP)
(74) Representative: Whalley, Kevin

(57) **Abstract**

A elastic pavement material for use to pave a traveled way and characterized by a low noise attained owing to its elasticity, gas permeability and sound absorption effect, is provided. It has a structure in which rigid aggregates and elastic aggregates firmly held together by a binder. The elastic pavement material comprises a mixture of the rigid and elastic aggregates in which the proportion of the rigid aggregates to all the aggregates is 40 to 75 % by volume. The mixture is to charged together with a binder into a mold to form a platelike molding of which the percent of void is 15 to 40 %.

## Description

### BACKGROUND OF THE INVENTION

### 1. Field of the Invention

The present invention relates to a pavement material for use to pave a traveled way and characterized by a low noise attained owing to its elasticity, gas permeability and sound absorption effect, and more particularly, to a elastic pavement material having a structure in which rigid aggregates and elastic aggregates firmly held together by a urethane binder.

### 2. Description of Related Art

The conventional elastic pavement materials include a highly elastic one having a structure in which rubber chips are firmly associated with a binder and which is widely used mainly for construction of a sidewalk and athletic field because of their high impact absorption and safety when a walker or athlete falls down, and a porous asphalt pavement which is porous to improve the gas permeability and sound absorption effect for reduction of the noise from vehicle wheel tires and thus used for constructing a traveled way from which the traffic noise should be lower.

The former pavement material using rubber chips firmly held together by a binder is highly elastic under a traffic load. When this pavement material is used to construct a traveled way, its high elasticity will possibly influence the steering stability of a vehicle traveling on the road and cause the vehicle wheel tires to easily slip when the road surface is wet. Because it is not so rigid, it is not suitable for construction of a traveled way.

On the other hand, the porous asphalt pavement can effectively suppress the noise from the vehicle wheel tires because of a high gas permeability and sound absorption effect owing to its porosity. Generally, it can provide a noise reduction by about 3 decibels (dB), but it cannot suppress the noise more.

### SUMMARY OF THE INVENTION

Accordingly, the present invention has an object to overcome the above-mentioned drawbacks of the prior art by providing a elastic pavement material composed of rigid and elastic aggregates held together by a urethane binder and showing a elasticity, gas permeability and sound absorption effect high enough to suppress the traffic noise.

The above object can be attained by providing a elastic pavement material composed of rigid and elastic aggregates firmly held together by a binder to form a pavement, comprising a mixture of the rigid and elastic aggregates in which the proportion of the rigid aggregates to all the aggregates is 40 to 75 % by volume, the mixture being to charged together with a binder into a mold to form a plate-like molding of which the percent of void is 15 to 40 %.

Also, the above object can be attained by providing a elastic pavement material composed of rigid and elastic aggregates firmly held together by a urethane binder to form a pavement, comprising a mixture of the rigid and elastic aggregates in which the proportion of the rigid aggregates to all the aggregates is 40 to 75 % by volume, the mixture being to be mixed with a two-component urethane binder in 15 to 30 % by volume to prepare a fluidic mixture which is to be placed and spread over a base layer of an intended pavement and then cured to form the pavement of which the percent of void is 15 to 40 %.

The pavement material according to the present invention provides a rather higher effect of noise reduction than the conventional porous asphalt because of its high gas permeability and sound absorption effect owing to an optimized percent of void as well as of its high elasticity.

These objects and other objects, features and advantages of the present intention will become more apparent from the following detailed description of the preferred embodiments of the present invention when taken in conjunction with the accompanying drawings.

### BRIEF DESCRIPTION OF THE DRAWINGS

FIG. 1 is a chart of constructing a traveled way pavement using a second embodiment of elastic pavement material according to the present invention;
FIG. 2 is a schematic sectional view of a first case of a pavement constructed using the second embodiment of elastic pavement material according to the present invention;
FIG. 3 is a schematic sectional view of a second case of a pavement constructed using the second embodiment of elastic pavement material according to the present invention;
FIG. 4 is a schematic sectional view of a third case of a pavement constructed using the second embodiment of elastic pavement material according to the present invention; and
FIG. 5 is a schematic sectional view of a fourth case of a pavement constructed using the second embodiment of elastic pavement material according to the present invention.

### DETAILED DESCRIPTION OF THE PREFERRED EMBODIMENTS

The first embodiment of the elastic pavement material according to the present invention is a mixture of rigid aggregates, elastic aggregates and a binder to firmly hold them together. In the mixture, the rigid aggregates have a proportion of 40 to 75 % by volume to all the aggregates. The mixture is charged along with the binder into a mold to form a plate-like molding of which the percent of void is 15 to 40 %. Using a bonding agent or adhesive, the molding is attached at one side thereof to a base layer of an intended pavement. More specifically, the elastic aggregates are rubber chips of 0.5 to 10 mm in size. The rigid aggregates are a mixture of course aggregates of 0.5 to 30 mm in particle size and 5% or more by volume of fine aggregates of 0.5 mm or less in particle size. The binder should preferably be a urethane binder or SBR latex. In some cases, 3 to 10 % by volume of a colorant is mixed in the binder as necessary. The elastic pavement material thus prepared should be about 10 to 100 mm thick, and preferably about 20 to 50 mm.

When a vehicle runs on a road, noises from the vehicle tires are caused by a vibration taking place due to the contact of the tire tread with the road surface. The noises are mainly a noise caused by a vibration of the tread pattern, side wall, etc. of the wheel tires, and a noise caused by a sound resonance in a tubular space defined by the rib and lug grooves of the tire and the road surface. On a road structure having voids therein such as a porous asphalt pavement, however, such a resonance will hardly take place and a developed noise will be low. In addition, the noise is suppressed owing to the sound absorption effect of the porous asphalt pavement. The pavement material according to the present invention is based on this fact. The percent of void of 15 to 40 % set for the pavement material of the present invention effectively prevents the noise from being caused by the resonance as in the porous asphalt pavement, and the sound absorption effect of the pavement material also permits to reduce the noise. When the percent of void of the pavement is under 15%, the pavement material has a lower water permeability, so that the rainwater will hardly permeate the pavement and also the pavement will have no good gas permeability and sound absorption effect. On the other hand, when the percent of void is over 40%, it is difficult to assure a strong pavement material. That is why the percent of void is defined to a range of 15 to 40 % in the present invention.

The conventional porous asphalt pavement is poor in elasticity. The pavement formed by placing and spreading the elastic pavement material according to the present invention has an excellent elasticity, thus the vibration is killed effectively, whereby it is made possible to reduce the noise caused by the vibration taking place due to the contact of the tire tread with the road surface. More particularly, the pavement material formed from the rubber chips firmly held together by the binder is elastic enough to effectively kill the vibration. Further, the pavement material is formed to have voids for effective suppression of the noise. However, the pavement material having a high elasticity and percent of void shows a large deformation when it is applied with a large traffic load. For example, if this type of pavement material is used to pave a traveled way, the large deformation will cause a vehicle to respond slowly to an operation of the steering wheel, which will remarkably impair the steering stability of the vehicle. When the pavement surface is wet, its skid resistance becomes lower than that on an ordinary road surface. Further, it cannot be said that the pavement of this type has a sufficient strength. Generally, the skid resistance should desirably be more than BPN 60 (as measured with a portable skid resistance tester). To attain the skid resistance, the mixing ratio of the rigid aggregates should be more 40% by volume of all the aggregates. If the mixing ratio is under 40%, the steering stability of a vehicle will adversely be affected as previously mentioned. That is why the mixing ratio of the rigid aggregates is defined to be more than 40% by volume. Also, unless the mixing ratio of the rigid aggregates is less than 75% by volume, the pavement will show a low elasticity. The binder should be a urethane binder or SBR latex, for example, which will assure a sufficient elasticity. The urethane binder is advantageously usable for molding the pavement material, and the SBR latex provides a highly thermal-resistant and weatherable pavement material. Therefore, any of these binder materials should be selected for an intended purpose. Further to the above, the urethane binder may be a moisture-curable one-component type. However, it is easily influenced by water or moisture and its cure rate cannot easily be adjusted. Thus, its cure time can hardly be reduced. Therefore, the urethane binder should preferably be a heat-curable one-component type or two-component type of which the cure rate can be adjusted as necessary. Further, the binder should be mixed in a larger amount than necessary to firmly bind the aggregates. However, mixing of the binder in too large an amount should be avoided since the excess of the binder will flow out on the aggregate surface to clog the voids. When a heat-curable one-component urethane binder or a two-component urethane binder is used for example, it should desirably be mixed in 15 to 30 % by volume.

Generally, the rigid aggregates include natural aggregates such as river gravel, river sand, and artificial aggregates such as crushed stones, slug, ceramics, etc. as non-limitative examples. The stones and sand used as the aggregates assure a strength and abrasion resistance of a completed pavement, and are exposed out of the pavement surface to provide an anti-skid effect, namely, a skid resistance. The rigid stones having sharp corners such as crushed stones are suitable for use as the rigid aggregates.

The rigid aggregates should be a mixture of course aggregates of 0.5 to 30 mm in particle size and fine aggregates of less than 0.5 mm in particle size in more than 5% by volume of all the rigid aggregates. The course aggregates provide a porous structure of pavement to assure mainly a water permeability, and thus they should preferably be rigid ones such as crushed stones which are associated with each other to define a void between them. On the other hand, the fine aggregates will adhere to the surfaces of larger course aggregates to provide an anti-skid effect, that is, a skid resistance (like the irregular or rough surface of an emery paper).

The rubber chips, that are small pieces or powder of rubber, will impart a elasticity to the pavement containing them. Rubber chips of about 0.5 to 10 mm in particle size are suitable for use in the pavement. However, too small rubber chips will enter into the pores or voids in the pavement to clog the pores and voids. Rubber chips of large particle sizes are effectively usable like the course aggregates to form a porous structure of the pavement which will thus be elastic. Therefore, a mixture of rubber chips different in particle size should preferably be used. The rubber chips may be formed from a natural rubber or synthetic rubber. They may be formed by mechanically crushing vulcanized rubber products such as ground-up old tires.

Furthermore, for any other reason, for example, when a harmony of the pavement with the surrounding scenery is required, a colorant may be mixed in the binder to color the pavement. In this case, a colorant should desirably be mixed in the binder in 3 to 10 % by volume of the binder. Alternately, colored rubber chips, for example, EPDM colored rubber chips, may be used as elasic aggregates to color the pavement.

For production of a elastic pavement material, a binder is added to a mixture of crushed stones, sand and rubber chips to prepare a pavement mixture, by way of example. When the binder is a two-component urethane binder, isocyanate group end prepolymer and polyol may be added separately or they may be added as a mixture of them prepared beforehand. Any method of adding the binder may be employed if it permits a uniform adhesion of the binder uniformly to the crushed stones, sand and rubber chips. Namely, the binder may be added by spraying for example. Also the urethane binder may be added at normal temperature. However, the temperature is low, the binder will be cured more slowly than necessary. On the contrary, when the temperature is high, the binder will be cured faster than necessary. Thus, it should be noted that the temperature has to be adjusted for addition of the binder as the case may be. A mixture prepared as in the above is injected into a mold and heated for a necessary time. Thereafter, a plate-like molding is released from the mold to provide the elastic pavement material.

### Experimental embodiments

Rubber chips and rigid aggregates were mixed at the ratios as specified in Table 1 to prepare pavement mixtures. Each of the mixtures was injected into a mold of 1 m in length, 1 m in length and 40 mm in thickness, and a hot press was used to form a plate-shaped molding. The molded plate was attached with a selected bonding agent or adhesive to a base layer of an intended pavement via a primer layer, to form the pavement.

The pavement thus formed was tested for a skid resistance and noise. The test results are as shown in Table 1.

**Table 1:**

| | Experimental embodiment 1 | Experimental embodiment 2 | Experimental embodiment 3 | Experimental embodiment 4 | Experimental embodiment 5 | Experimental embodiment 6 | Experimental embodiment 7 | Prior art |
|---|---|---|---|---|---|---|---|---|
| Rigid aggregates | | | | | | | | |
| (a) Diameter (mm)/% by volume | 0.5 ∼ 5/35 | 0.5 ∼ 5/53 | 0.5 ∼ 15/35 | 5 ∼ 15/35 | 15 ∼25/10 | 0.5 ∼ 5/53 | 0.5 ∼ 5/53 | |
| (b) Diameter (mm)/% by volume | 0.5 or less /5 | 0.5 or less /3 | 0.5 or less /5 | 0.5 or less /5 | 5 ∼ 15/25 | 0.5 or less /3 | 0.5 or less /5 | |
| (c) Diameter (mm)/% by volume | _ | _ | _ | _ | 0.5 or less /5 | - | - | |
| Elastic aggregates | Tire-recycled rubber chips | Tire-recycled rubber chips | Tire-recycled rubber chips | Tire-recycled rubber chips | Tire-recycled rubber chips | Tire-recycled rubber chips | Colored EPDM chips (white) | |
| (a) Diameter (mm)/% by volume | 1.5 ∼ 3/40 | 1.5 ∼ 3/24 | 1.5 ∼ 3/15 | 5 ∼ 10/40 | 5 ∼ 10/40 | 1.5 ∼ 3/24 | 1.5 ∼ 3/30 | |
| | | | Colored EPDM chips (white) | | | | | |
| (b) Diameter (mm)/% by volume | - | - | 1.5 ∼ 3/15 | - | - | - | - | |
| Binder Material/% by volume | Urethane/19 | SBR latex/20 | Urethane/30 | Urethane/19 | Urethane/19 | Urethane/20 | Urethane/30 | |
| Colorant Material/% by volume | Black (carbon)/1 | None | None | Black (carbon)/1 | Black (carbon)/1 | None | None | |
| Base layer | Concrete slab | Asphalt pavement | Semi-rigid pavement | Asphalt pavement | Concrete slab | Concrete slab | Semi-rigid pavement | |
| Attaching | Epoxy bonding agent | Modified asphalt | Epoxy bonding agent | Epoxy bonding agent | SIS adhesive | SIS adhesive | Epoxy bonding agent | |
| Skid rsistance (BPN) | 69 | 70 | 67 | 73 | 72 | 71 | 66 | 67 |
| Noise suppression effect (dB) | 6 | 6.5 | 7 | 6.2 | 6 | 6 | 6.1 | 3.2 |
| Percent of void (%) | 31 | 29 | 27 | 33 | 35 | 30 | 26 | 20 |

For comparison with the pavements formed from the elastic pavement material according to the present invention, a porous asphalt pavement was formed from crushed stones of 5 to 13 mm in diameter as course aggregates, and a high viscosity modified asphalt as a binder. This comparative pavement had a thickness of 40 mm and a percent of void of 20%.

The noise from the pavements were determined by measuring a sound from the wheel tires of a vehicle (passenger car) running on the pavement towards the test point. The "noise suppression effect" shown in Table 1 is a difference in level (in dB) between a noise measured as to the pavement having no voids formed therein and that measure as to the pavement formed from the elastic pavement material according to the present invention. The larger value indicates a higher noise suppression on the pavement.

Next, the second embodiment of elastic pavement material according to the present invention will be described herebelow:

This is a elastic pavement material composed of rigid and elastic aggregates firmly held together by a urethane binder to form a pavement, comprising a mixture of the rigid and elastic aggregates in which the proportion of the rigid aggregates to all the aggregates is 40 to 75 % by volume, the mixture being to be mixed with a two-component urethane binder in 15 to 30 % by volume to prepare a fluidic mixture which is to be placed and spread over a base layer of an intended pavement and then cured to form the pavement of which the percent of void is 15 to 40 %.

The binder is a urethane binder which imparts an excellent flexibility to an intended pavement. The binder may be a moisture-curable one-component urethane binder, but it is easily influenced by water or moisture. It cannot be adjusted in cure rate, so that it is difficult to reduce its curing period. Thus, a two-component urethane binder of which the cure rate can be adjusted as necessary should desirably be used. If the binder is used in an amount less than 15% by volume, it will not firmly hold the aggregates together. On the contrary, if the amount of the binder used exceeds 30% by volume, the binder will flow out from the surfaces of the aggregates and enter the voids between the aggregates, possibly causing to clog the voids. That is why the amount of the binder is defined to be 15 to 30 % by volume in the present invention.

The rigid aggregates for this embodiment are similar to those used in the first embodiment having been described in the foregoing. Also the elastic aggregates used in this second embodiment are similar to those used in the first embodiment.

The urethane binder is used to bind the aggregates and rubber chips together. A two-component type urethane binder should preferably be used. In a preferred two-component urethane binder, isocyanate group end prepolymer and polyol are mixed at an equivalent ratio of 0.2 to 0.8, for example, between hydroxyl and isocyanate groups.

In a preferable example of the isocyanate group end prepolymer for use in the urethane binder, the isocyanate content is 5 to 25 %, the viscosity is 1,000 to 5,000 CP (at 25°C) and the mean number of functional groups is 2 to 3. The isocyanate for the prepolymer may be diphenyl methane diisocyanate polyisocyanate, for example. As an active hydrogen compound used denaturation, polyalkylene glycol is ordinarily used in a molecular weight of 1,000 to 3,000.

On the other hand, the polyol should desirably be such that its mean number of functional groups is 2 to 6, number-average molecular weight is less than 1,000 and more than a half of the hydroxyl groups are a primary hydroxyl group. More specifically, the primary hydroxyl groups include ethylene glycol, diethylene glycol, polyalkylene ether glycol, etc.

The mixing ratio of isocyanate group end prepolymer and polyol should suitably be within a range of 0.2 to 0.8 in equivalent ratio of hydroxyl group and isocyanate group. The mixing ratio may be adjusted according to a selected cure rate of an intended pavement. In addition, a well-known accelerator such as amine type, metallic type or the like may be used.

To form a pavement from the elastic pavement material according to the present invention, a urethane binder is added to a mixture of crushed stones, sand and rubber chips to prepare a pavement mixture. At this time, a colorant may be added to color the pavement. When the binder is a two-component urethane binder, it may be added to the mixture of crushed stones, sand and rubber chips in any of the following ways. Namely, the two components, that is, isocyanate group end prepolymer and polyol, are added separately or they may be added as a mixture of them prepared beforehand. Any method of adding the binder may be employed if it permits a uniform adhesion of the binder uniformly to the crushed stones, sand and rubber chips. Namely, the binder may be added by spraying for example. Also the urethane binder may be added at normal temperature. However, the temperature is low, the binder will be cured more slowly than necessary. On the contrary, when the temperature is high, the binder will be cured faster than necessary. Thus, it should be noted that the temperature has to be adjusted for addition of the binder as the case may be. Furthermore, for any other reason, for example, when a harmony of the pavement with the surrounding scenery is required, a colorant may be mixed in the binder to color the pavement. In this case, a colorant should desirably be mixed in the binder in 3 to 10 % by volume of the binder. Alternately, colored rubber chips, for example, EPDM colored rubber chips, may be used as elastic aggregates to color the pavement.

### Experimental pavements

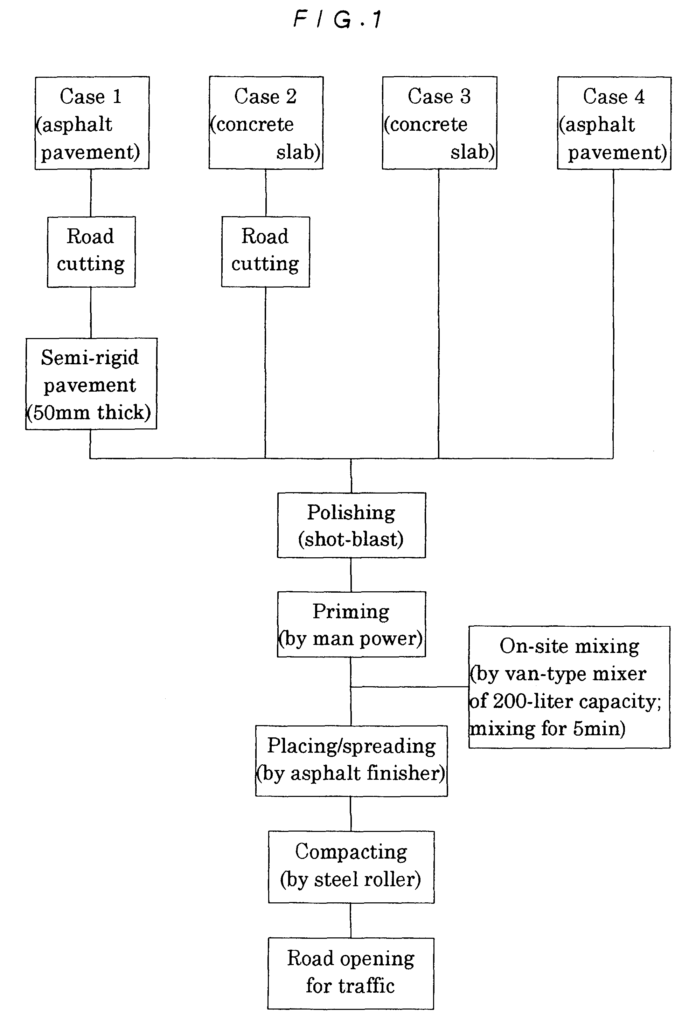

Referring now to FIG. 1, there is illustrated a schedule of constructing a traveled way pavement using the second embodiment of elastic pavement material according to the present invention. Experimental pavements were formed according to this schedule of which the outline will be described below:
1. Road cutting (cases 1 and 2)
   An existing asphalt pavement or concrete pavement was cut to a predetermined depth by a road cutter.
2. Semi-rigid pavement (for case 1)
   In case the existing pavement was of an asphalt one, a semi-rigid pavement was formed. The semi-rigid pavement is a one that a cement milk is injected into voids between porous asphalt pavement.
3. Polishing
   The semi-rigid pavement surface was polished by shot blasting to form a base layer for the intended pavement.
4. Priming
   A primer incorporating a solvent (ethyl acetate), urethane resin and variety of additives was applied to the base layer using a roller brush.
5. On-site mixing
   The rigid aggregates, elastic aggregates, urethane binder, etc. were mixed together in a mixer to prepare a pavement mixture. This mixing was done near each of the pavement construction sites (by of 200-liter capacity; mixing for 5 min) with the mixer moved along with the asphalt finisher from site to site.
6. Placing/spreading
   The pavement mixture was placed and spread by an asphalt finisher at a rate of 0.5 to 1 m/min including an amount for an extra-banking.
7. Compacting (by steel roller)
   The pavement mixture thus placed and spread was compacted by a 2.5-ton tandem roller machine and a vibrating tamper.
8. Road opening for traffic
   The pavement mixture thus compacted was left until it was completely cured. After the pavement mixture was confirmed to be completely cured and solidified, the pavement was opened for traffic.

Table 2 specifies in detail the pavement mixture, and also the measured skid resistance (BPN) and noise suppression effect (dB).

**Table 2:**

| | Experimental pavement 1 | Experimental pavement 2 | Experimental pavement 3 | Experimental pavement 4 | Experimental pavement 5 | Experimental pavement 6 | Experimental pavement 7 | Prior art |
|---|---|---|---|---|---|---|---|---|
| Method | Case 1 | Case 2 | Case 3 | Case 2 | Case 4 | Case 2 | Case 2 | Porous asphalt pavement |
| Rigid aggregates | | | | | | | | |
| (a) Diameter (mm)/% by volume | 0.5 ∼ 5/35 | 0.5 ∼ 5/53 | 0.5 ∼ 5/38 | 0.5 ∼ 5/35 | 5 ∼15/35 | 15 ∼25/35 | 0.5 ∼ 5/35 | |
| (b) Diameter (mm)/% by volume | 0.5 or less /5 | 0.5 or less /3 | 0.5 or less /2 | 0.5 or less /5 | 0.5 or less /5 | 0.5 or less /5 | 0.5 or less /5 | |
| Rubber chip | Tire-recycled rubber chips | Tire-recycled rubber chips | Tire-recycled rubber chips | Colored EPDM chips (white) | Tire-recycled rubber chips | Colored EPDM chips (black) | Colored EPDM chips (white) | |
| Diameter (mm)/% by volume | 1.5 ∼3/40 | 1.5 ∼ 3/24 | 1.5 ∼ 3/40 | 1.5 ∼ 3/40 | 5 ∼ 10/40 | 5 ∼ 10/40 | 1.5 ∼3/15 | |
| | | | | | | | Tire-recycled rubber chips 1.5 ∼ 3/15 | |
| Binder in % by volume | 19 | 20 | 20 | 20 | 19 | 20 | 30 | |
| Colorant in % by volume | Black (carbon)/1 | None | None | None | Black (carbon)/1 | None | None | |
| Skid rsistance (BPN) | 69 | 72 | 67 | 66 | 73 | 74 | 70 | 67 |
| Noise suppression effect (dB) | 6 | 6.7 | 7 | 6.1 | 6 | 5.6 | 6.6 | 3.2 |
| Percent of void (%) | 33 | 30 | 32 | 33 | 35 | 37 | 29 | 20 |

For comparison with the second embodiment of elastic pavement material, a porous asphalt pavement was formed from crushed stones of 5 to 13mm in size as course aggregates, and a high viscosity modified asphalt as a binder. This comparative pavement had a thickness of 40 mm and a percent of void of 20%.

The noise from the pavements were determined by measuring a sound from the tires of a vehicle (passenger car) running on the pavement towards the test point. The "noise suppression effect" shown in Table 2 is a difference in level (in dB) between a noise measured as to the pavement having no voids formed therein and that measure as to the pavement formed from the elastic pavement material according to the present invention. The larger value indicates a higher noise suppression on the pavement.

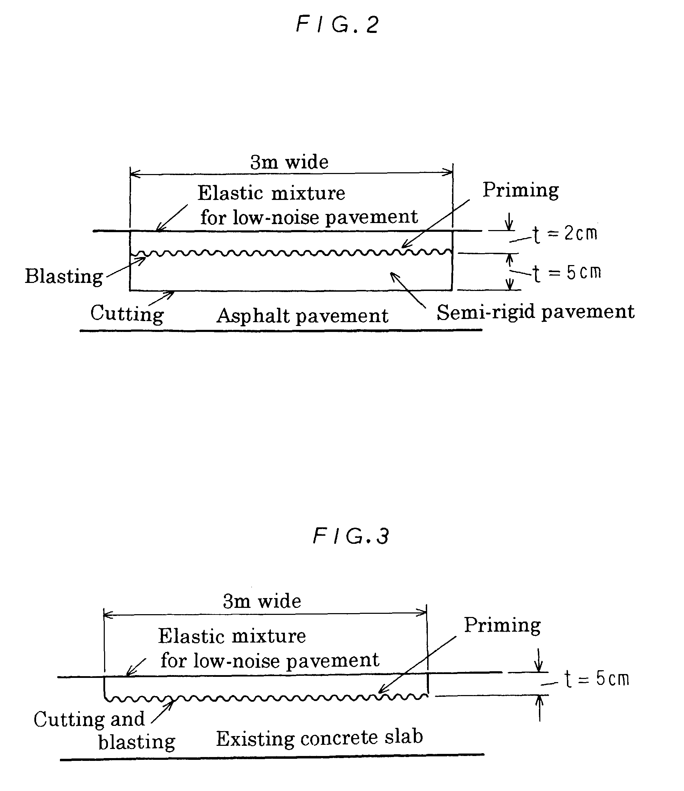

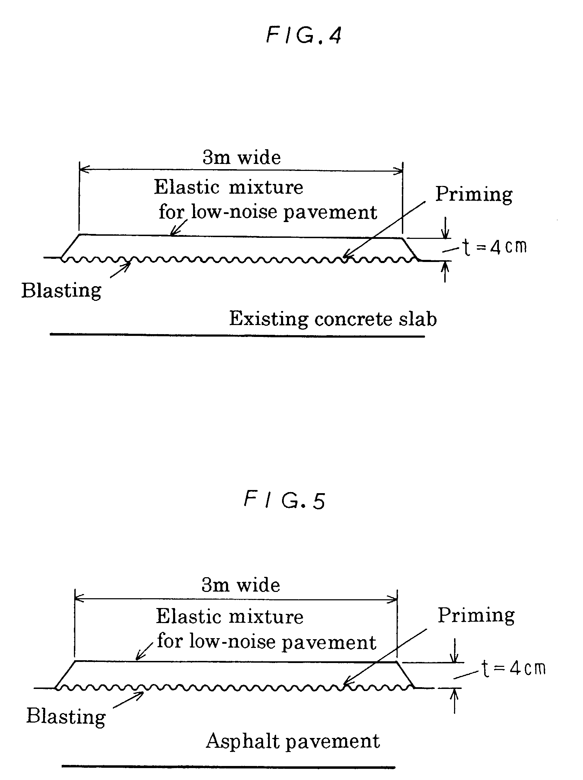

The structures of the experimental pavements 1 to 4 in Table 2 are shown in FIGS. 2 to 5 by way of example.

## Claims

1. A elastic pavement material composed of rigid and elastic aggregates firmly held together by a binder to form a pavement, comprising a mixture of the rigid and elastic aggregates in which the proportion of the rigid aggregates to all the aggregates is 40 to 75 % by volume, the mixture being to charged together with a binder into a mold to form a plate-like molding of which the percent of void is 15 to 40 %.

2. The elastic pavement material as set forth in Claim 1, wherein the elastic aggregates are rubber chips of 0.5 to 10 mm in size.

3. The elastic pavement material as set forth in Claim 1, wherein the elastic aggregates are a mixture of course aggregates of 0.5 to 30 mm in particle size and 5% or more by volume of fine aggregates of 0.5 mm or less in particle size.

4. The elastic pavement material as set forth in Claim 1, wherein the binder is urethane binder.

5. The elastic pavement material as set forth in Claim 1, wherein the binder is SBR latex.

6. The elastic pavement material as set forth in Claim 1, wherein 3 to 10 % by volume of a coloring material is mixed in the binder.

7. The elastic pavement material as set forth in Claim 1, wherein a part or whole of the elastic aggregates are colored rubber chips.

8. A elastic pavement material composed of rigid and elastic aggregates firmly held together by a urethane binder to form a pavement, comprising a mixture of the rigid and elastic aggregates in which the proportion of the rigid aggregates to all the aggregates is 40 to 75 % by volume, the mixture being to be mixed with a two-component urethane binder in 15 to 30 % by volume to prepare a fluidic mixture which is to be placed and spread over a base layer of an intended pavement and then cured to form the pavement of which the percent of void is 15 to 40 %.

9. The elastic pavement material as set forth in Claim 8, wherein the elastic aggregates are rubber chips of 0.5 to 10 mm in size.

10. The elastic pavement material as set forth in Claim 8, wherein the elastic aggregates are a mixture of course aggregates of 0.5 to 30 mm in particle size and 5% or more by volume of fine aggregates of 0.5 mm or less in particle size.

11. The elastic pavement material as set forth in Claim 8, wherein the urethane component of the urethane binder is an isocyanate group end prepolymer and polyol.

12. The elastic pavement material as set forth in Claim 8, wherein 3 to 10 % by volume of a coloring material is mixed in the binder.

13. The elastic pavement material as set forth in Claim 8, wherein a part or whole of the elastic aggregates is colored rubber chips.
